# EUROPEAN PATENT APPLICATION

(11) **EP 4 703 871 A1**
(43) Date of publication of application: **04.03.2026**
(21) Application number: 24795911.7
(22) Date of filing: 16.04.2024
(51) Int. Cl.: G06F 8/65

(54) **FLASHING METHOD AND APPARATUS FOR VEHICLE SYSTEM, AND ELECTRONIC DEVICE, VEHICLE AND STORAGE MEDIUM**

(30) Priority: 26.04.2023 CN 202310482676
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LI, Jiajia, Ningbo, Zhejiang 315899 (CN); ZENG, Fandong, Ningbo, Zhejiang 315899 (CN); LU, Jianfeng, Ningbo, Zhejiang 315899 (CN); LI, Ronghua, Ningbo, Zhejiang 315899 (CN); YUE, Xiangqing, Ningbo, Zhejiang 315899 (CN)
(74) Representative: Boult Wade Tennant LLP
(86) International application number: PCT/CN2024/088124
(87) International publication number: WO 2024/222530

(57) **Abstract**

The present application provides a flashing method and apparatus for a vehicle system, an electronic device, a vehicle, and a storage medium. The method includes: when a vehicle is in a traveling state, reading partition information of a vehicle control unit; determining a main system partition and a backup system partition of the vehicle control unit according to the partition information; accessing the backup system partition to obtain breakpoint information, where the breakpoint information represents a breakpoint position of the backup system partition during travel flashing, and file information used for the travel flashing; performing a travel flashing processing on the backup system partition according to the breakpoint position and the file information to obtain a target backup system partition; when the vehicle is in a parking state, switching the state of the main system partition to an inactive state, and switching the state of the target backup system partition to an active state. The method of the present application improves the convenience of use of the vehicle during system updating and upgrading.

## Description

The present application claims the priority of Chinese Patent Application No. 202310482676.8, filed with the China National Intellectual Property Administration on April 26, 2023, and entitled "FLASHING METHOD AND APPARATUS FOR VEHICLE SYSTEM, ELECTRONIC DEVICE, VEHICLE AND STORAGE MEDIUM", which is hereby incorporated by reference in its entirety.

### TECHNICAL FIELD

The present application relates to the field of communication technologies, and in particular to a flashing method and apparatus for a vehicle system, an electronic device, a vehicle, and a storage medium.

### BACKGROUND

Over-the-air technology (Over-the-Air Technology, OTA) is a technology to update system software remotely by using a network through an air interface of mobile communication.

In the prior art, when updating software of a vehicle, the over-the-air technology is generally used, that is, after a carrier of software update is downloaded, the control system inside the vehicle is flashed, to implement the software update of the control system.

However, when the in-vehicle system of an existing vehicle is updated and upgraded, there is a problem that the vehicle is inconvenient to use during the update and upgrade, which reduces the user experience.

### SUMMARY

The present application provides a flashing method and apparatus for a vehicle system, an electronic device, a vehicle, and a storage medium, to solve the problem that a vehicle is inconvenient to use during the update and upgrade of an in-vehicle system.

In a first aspect, the present application provides a flashing method for a vehicle system, which includes:
when a vehicle is in a traveling state, reading partition information of a vehicle control unit;
determining a main system partition and a backup system partition of the vehicle control unit according to the partition information, where the main system partition is a system partition in an active state and the backup system partition is a system partition in an inactive state;
accessing the backup system partition to obtain breakpoint information, where the breakpoint information represents a breakpoint position of the backup system partition during travel flashing, and file information used for the travel flashing;
performing a travel flashing processing on the backup system partition according to the breakpoint position and the file information, to obtain a target backup system partition; and
when the vehicle is in a parking state, switching the state of the main system partition to an inactive state, and switching the state of the target backup system partition to an active state.

In an embodiment of the present application, after determining the main system partition and the backup system partition of the vehicle control unit according to the partition information, and before accessing the backup system partition to obtain the breakpoint information, the method further includes:
requesting the backup system partition to enter a session mode; and
after the backup system partition enters the session mode, executing the step of accessing the backup system partition to obtain the breakpoint information.

In an embodiment of the present application, after requesting the backup system partition to enter the session mode, after the backup system partition enters the session mode, and before executing the step of accessing the backup system partition to obtain the breakpoint information, the method further includes:
checking a current mode of the backup system partition; and
if the current mode is the session mode, executing the step of accessing the backup system partition to obtain the breakpoint information.

In an embodiment of the present application, accessing the backup system partition to obtain breakpoint information includes:
accessing the backup system partition to acquire a state of a boot loader in the backup system partition; and
if the boot loader is in a program inactive state, sending a boot loader to the backup system partition, and performing, after the backup system partition receives the boot loader, a signature verification on the boot loader to obtain a signature verification result, and then executing the step of accessing the backup system partition to obtain the breakpoint information according to the signature verification result.

In an embodiment of the present application, after accessing the backup system partition to acquire the state of the boot loader in the backup system partition, the method further includes:
if the boot loader is in a program active state, executing the step of accessing the backup system partition to obtain the breakpoint information.

In an embodiment of the present application, performing the travel flashing processing on the backup system partition according to the breakpoint position and the file information to obtain the target backup system partition includes:
performing an erasure processing on the backup system partition according to the breakpoint position to obtain an initial update backup system partition; and
performing the travel flashing processing on the initial update backup system partition according to the file information to obtain the target backup system partition.

In an embodiment of the present application, performing the travel flashing processing on the initial update backup system partition according to the file information to obtain the target backup system partition includes:
determining a file identifier and a file address according to the file information;
performing a data transmission to the initial update backup system partition according to the file identifier and the file address to obtain transmitted data; and
performing the travel flashing processing from the breakpoint position according to the transmitted data to obtain the target backup system partition.

In an embodiment of the present application, the method further includes:
when a data breakpoint occurs during data transmission to the initial update backup system partition, updating the breakpoint information according to the data breakpoint to obtain updated breakpoint information; and
according to the updated breakpoint information, returning to the step of determining the main system partition and the backup system partition of the vehicle control unit according to the partition information.

In an embodiment of the present application, after performing the travel flashing processing on the backup system partition according to the breakpoint position and the file information to obtain the target backup system partition, and before the step of when the vehicle is in the parking state, switching the state of the main system partition to the inactive state and switching the state of the target backup system partition to the active state, the method further includes:
checking an integrity and compatibility of software in the target backup system partition to obtain a check result; and
if the check result meets a preset check result requirement, executing the step of when the vehicle is in the parking state, switching the state of the main system partition to the inactive state and switching the state of the target backup system partition to the active state.

In an embodiment of the present application, the method further includes:
during switching the state of the target backup system partition to the active state, performing a clearing processing on a diagnostic trouble code in the target backup system partition.

In a second aspect, the present application provides a flashing apparatus for a vehicle system, including:
a reading module, configured to read partition information of a vehicle control unit when a vehicle is in a traveling state;
a determining module, configured to determine a main system partition and a backup system partition of the vehicle control unit according to the partition information, where the main system partition is a system partition in an active state and the backup system partition is a system partition in an inactive state;
an obtaining module, configured to access the backup system partition to obtain breakpoint information, where the breakpoint information represents a breakpoint position of the backup system partition during travel flashing, and file information used for the travel flashing;
a travel flashing module, configured to perform a travel flashing processing on the backup system partition according to the breakpoint position and the file information to obtain a target backup system partition; and
a switching module, configured to, when the vehicle is in a parking state, switch the state of the main system partition to an inactive state and switch the state of the target backup system partition to an active state.

In a third aspect, the present application provides an electronic device, which includes a processor and a memory in communicatively connected with the processor; where
the memory stores computer-executable instructions; and
the processor executes the computer-executable instructions stored in the memory to implement the flashing method for the vehicle system in the embodiments of the present application.

In a fourth aspect, the present application provides a vehicle, including the electronic device of the embodiments of the present application.

In a fifth aspect, the present application provides a computer-readable storage medium, which stores computer-executable instructions that, when executed by a processor, enable to implement the flashing method for the vehicle system of the embodiments of the present application.

The flashing method and apparatus for a vehicle system, the electronic device, the vehicle and the storage medium provided by the present application involve: when a vehicle is in a traveling state, reading partition information of a vehicle control unit; determining a main system partition and a backup system partition of the vehicle control unit according to the partition information, where the main system partition is a system partition in an active state and the backup system partition is a system partition in an inactive state; accessing the backup system partition to obtain breakpoint information, where the breakpoint information represents a breakpoint position of the backup system partition during travel flashing, and file information used for the travel flashing; performing a travel flashing processing on the backup system partition according to the breakpoint position and the file information, to obtain a target backup system partition; when the vehicle is in a parking state, switching the state of the main system partition to an inactive state, and switching the state of the target backup system partition to an active state. As such, by performing the flashing on the backup system partition, the use of the main system partition can be prevented from being affected, and at the same time, by acquiring the breakpoint information of the backup system partition, the flashing of the backup system partition can be performed at any time according to the user's use of the vehicle, thereby solving the problem that the vehicle is inconvenient to use during the system update and upgrade.

### BRIEF DESCRIPTION OF DRAWINGS

The accompanying drawings herein, which are incorporated in and constitute a part of this description, illustrate embodiments consistent with the present application and together with the description, serve to explain the principles of the present application.
FIG. 1 is a schematic flow chart of a flashing method for a vehicle system provided by an embodiment of the present application;
FIG. 2 is a schematic flow chart of another flashing method for a vehicle system provided by an embodiment of the present application;
FIG. 3 is a structural schematic diagram of a flashing apparatus of a vehicle system provided by an embodiment of the present application;
FIG. 4 is a schematic structural diagram of an electronic device provided by an embodiment of the present application.

Through the above accompanying drawings, specific embodiments of the present application have been shown, and more detailed descriptions will be provided in the following. These accompanying drawings and textual descriptions are not intended to limit the scope of concept of the present application in any way, but rather to illustrate the concept of the present application to those skilled in the art by referring to the specific embodiments.

### DESCRIPTION OF EMBODIMENTS

Description will now be given in detail to exemplary embodiments, examples of which are shown in the accompanying drawings. When the following description refers to the accompanying drawings, unless otherwise indicated, the same numbers in different drawings indicate the same or similar elements. Implementations described in the following exemplary embodiments do not represent all implementations consistent with the present application. Rather, they are merely examples of apparatuses and methods consistent with some aspects of the present application as detailed in the appended claims.

In the prior art, when using the OTA to upgrade software of an in-vehicle system, it is usually carried out in the situation of the vehicle being parked or locked, which takes a long time. For users, they cannot use the vehicle or even open the door during this period of time, so it is inconvenient to use and the user experience is not very good.

In order to solve the above-mentioned problems, a flashing method for a vehicle system provided by the present application can partition the in-vehicle system, and in the case that software of the in-vehicle system is upgraded, a backup system partition in an inactive state can be updated and upgraded, whereas an main system partition in an active state can be used normally, and thus the normal driving and use of the vehicle will not be affected, and at the same time, the process of updating and upgrading the backup system partition can be interrupted at any time through breakpoint information, and thus will not prevent the user from parking or locking the vehicle. Therefore, the problem that the vehicle is inconvenient to use during the system update and upgrade is solved.

The technical solutions of the present application and how the technical solutions of the present application solve the above technical problems will be described in detail with specific embodiments. The following specific embodiments can be combined with each other, and the same or similar concepts or processes may not be repeated in some embodiments. Embodiments of the present application will be described below with reference to the accompanying drawings.

The execution entity of a flashing method for a vehicle system provided by an embodiment of the present application can be a server. The server can be an on-board computer and other device. In embodiments, there is no special restriction on the implementation of the execution entity, as long as the execution entity can execute the following: read partition information of a vehicle control unit when a vehicle is in a traveling state; determine a main system partition and a backup system partition of the vehicle control unit according to the partition information, where the main system partition is a system partition in an active state and the backup system partition is a system partition in an inactive state; access the backup system partition to obtain breakpoint information, where the breakpoint information represents a breakpoint position of the backup system partition during travel flashing, and file information used for the travel flashing; perform a travel flashing processing on the backup system partition according to the breakpoint position and the file information, to obtain a target backup system partition; when the vehicle is in a parking state, switch the state of the main system partition to an inactive state, and switch the state of the target backup system partition to an active state.

The flashing can refer to ECU data flashing or ECU data programming, with the fundamental principle as follows: an external data flashing tool sends data information to ECU via an ECU communication network (mostly K-line and CAN bus) to implement management and update of ECU data.

An OTA Masterr plays a role of diagnostic instrument in an OTA upgrade process, and has certain storage function. During the upgrade process, it can download and store a large number of upgrade packages.

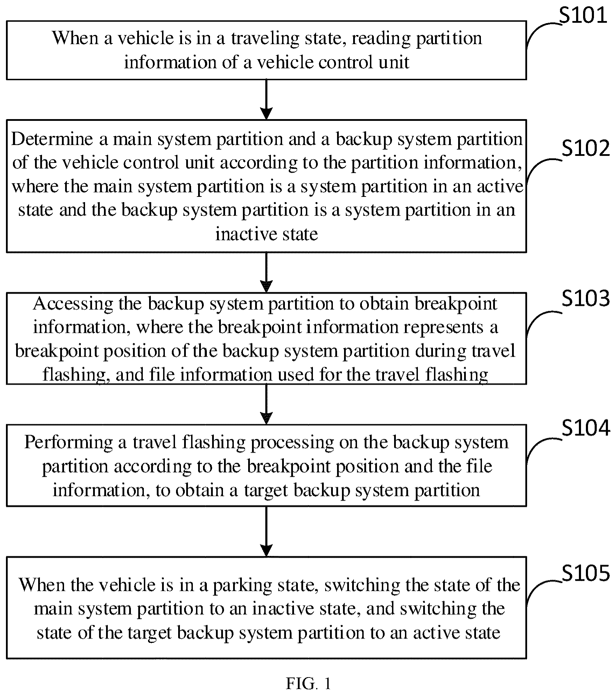

FIG. 1 is a schematic flow chart of a flashing method for a vehicle system provided by an embodiment of the present application. The execution entity of the method may be an OTA controller, and it is not particularly limited in this embodiment. As shown in FIG. 1, the method may include steps below.

S101, when a vehicle is in a traveling state, reading partition information of a vehicle control unit.

Where the traveling state can refer to a state of the vehicle under a startup condition, for example, a state of the vehicle after startup and a running state of the vehicle after startup.

The vehicle control unit can be an electronic control unit (Electronic Control Unit, ECU). The electronic control unit can refer to a vehicle computer or an on-board computer in a vehicle, and can be composed of a microcontroller, a memory, an input/output interface, an analog-to-digital converter, as well as a large-scale integrated circuit, such as shaping circuit and driving circuit.

The partition information may refer to AB partition information of a system in the vehicle control unit, where the AB partition information may include information about a main system partition currently in use in the vehicle control unit and information about a backup system partition. In an embodiment of the present application, the partition information can characterize a state of a system partition, for example, whether the system partition supports AB partitioning.

When the vehicle is in the traveling state, reading the partition information of the vehicle control unit can refer to the OTA Master reading the AB partition information of the ECU of the whole vehicle.

S102, determining a main system partition and a backup system partition of the vehicle control unit according to the partition information, where the main system partition is a system partition in an active state and the backup system partition is a system partition in an inactive state.

The main system partition can be a system partition in an active state, meaning that it is a system partition currently in use.

The backup system partition can be a system partition in an inactive state, where the backup system partition is a system partition that is not currently in use and supports the travel flashing by default. There can be at least one backup system partition. In embodiments of the present application, after reading the partition information of the vehicle control unit when the vehicle is in the traveling state, function addressing can be performed according to the partition information, to screen out a backup system partition that can support the travel flashing.

In an embodiment of the present application, after determine the main system partition and the backup system partition of the vehicle control unit according to the partition information, before accessing the backup system partition to obtain the breakpoint information, the method may further include:
requesting the backup system partition to enter a session mode;
after the backup system partition enters the session mode, executing the step of accessing the backup system partition to obtain the breakpoint information.

The session mode can refer to the backup system partition entering an OTA session mode, which is a module dedicated to conducting a session with the OTA Master. In the case that the backup system partition supports AB partition flashing, the backup system partition can enter the OTA session mode, to perform flashing on the backup system partition. In the case that the backup system partition does not support the AB partition flashing, it indicates that the backup system partition cannot be flashed.

In an embodiment of the present application, after requesting the backup system partition to enter the session mode, after the backup system partition enters the session mode, and before the step of accessing the backup system partition to obtain the breakpoint information, the method may further include:
checking a current mode of the backup system partition;
if the current mode is the session mode, executing the step of accessing the backup system partition to obtain the breakpoint information.

After entering the session mode, in order to ensure the normal use between the backup system partition and the OTA, and to avoid the backup system partition exiting the session mode, the current mode of the backup system partition is checked again before accessing the backup system partition, and if the current mode is the session mode, the step of accessing the backup system partition to obtain the breakpoint information is executed.

S103, accessing the backup system partition to obtain breakpoint information, where the breakpoint information represents a breakpoint position of the backup system partition during travel flashing, and file information used for the travel flashing.

The access can be a secure access, and the secure access refers to an authorization method that, based on vehicle safety, allows a diagnostic device to access important data inside the ECU or requests the ECU to perform a diagnostic service that affects vehicle safety. The secure access can be implemented by means of seed-key (Seed-Key). When the ECU is not unlocked through the secure access, it is in a locked state, and it is not allowed to access important data (DID)/storage area and perform some diagnostic services that affect vehicle safety.

The breakpoint information may include a breakpoint position of the backup system partition during flashing, and file information used during flashing. The breakpoint position can be characterized as a position where flashing was performed on the backup system partition, where the position can be an interruption position where the last flashing was not completed due to problems such as the vehicle stopping during flashing of the backup system partition; or can be characterized as a start position where the flashing is needed during flashing of the backup system partition. The file information may include a file identifier and a file address, where the file identifier may be an identifier for identifying a file to be transmitted, and the file address may be address information for determining the file to be transmitted. Through the file identifier and the file address, the file to be transmitted can be downloaded from a cloud server, to perform the flashing of the backup system partition.

The travel flashing can refer to a process of flashing the system when the vehicle is in a traveling state.

In an embodiment of the present application, a method for accessing the backup system partition to obtain the breakpoint information may include:
accessing the backup system partition to acquire a state of a boot loader in the backup system partition; and
if the boot loader is in a program inactive state, sending a boot loader to the backup system partition, and performing, after the backup system partition receives the boot loader, a signature verification on the boot loader to obtain a signature verification result, and then executing the step of accessing the backup system partition to obtain the breakpoint information according to the signature verification result.

In an embodiment of the present application, after accessing the backup system partition to acquire the state of the boot loader in the backup system partition, the method may further include:
if the boot loader is in a program active state, executing the step of accessing the backup system partition to obtain the breakpoint information.

The boot loader (boot loader) can be a program that is located on a computer or other computer applications and is used to boot an operating system. The boot loader can include an active state and an inactive state, where the active state can refer to that a verified boot loader has existed in the backup system partition, and the file to be transferred can be directly acquired for the system flashing; the inactive state can refer to the absence of a verified boot loader in the backup system partition, which needs to receive a boot loader, to ensure the accuracy of the received transferred files, thereby performing the flashing of the backup system partition.

In the embodiment of the present application, the boot loader can be a Flash Driver signature. The Flash Driver signature can be codes used to perform erasing and flashing on the flash during an OTA program updates of the ECU. The Flash Driver signature can avoid calling this part of the codes by mistake when the program runs amok, which will damage the part of software codes.

In an embodiment of the present application, when it is detected that the boot loader is in the program inactive state, the Flash Driver signature as the boot loader is acquired, and after the Flash Driver signature is received, a signature verification can be performed on the Flash Driver signature, and after the signature verification is passed, the step of accessing the backup system partition to obtain the breakpoint information is executed. When it is detected that the boot loader is in the program active state, the step of accessing the backup system partition to obtain the breakpoint information is directly executed.

S104, performing a travel flashing processing on the backup system partition according to the breakpoint position and the file information, to obtain a target backup system partition.

The travel flashing processing can be a process of performing flashing on the backup system partition in the traveling state of the vehicle. The target backup system partition can refer to a system partition obtained after the completion of the travel flashing processing.

In an embodiment of the present application, a method of performing the travel flashing processing on the backup system partition according to the breakpoint position and the file information to obtain the target backup system partition can include:
performing an erasure processing on the backup system partition according to the breakpoint position to obtain an initial update backup system partition; and
performing the travel flashing processing on the initial update backup system partition according to the file information to obtain the target backup system partition.

The erasure processing can refer to a process of erasuring codes of the backup system partition from the breakpoint position. The initial update backup system partition can refer to a system partition obtained after performing an erasure processing on the backup system partition.

In an embodiment of the present application, a method of performing the travel flashing processing on the initial update backup system partition according to the file information to obtain the target backup system partition may include:
determining a file identifier and a file address according to the file information;
performing a data transmission to the initial update backup system partition according to the file identifier and the file address to obtain transmitted data;
performing the flashing processing from the breakpoint position according to the transmitted data to obtain the target backup system partition.

The file identifier can refer to an identifier of a file package that needs to be transmitted, and the file address can refer to an address of a file that needs to be transmitted. A file to be transmitted can be accurately determined through the file identifier and the file address, to perform the flashing of the initial update backup system partition.

The data transmission can refer to a process of downloading a file to be transmitted from a cloud server to the backup system partition to perform flashing.

In an embodiment of the present application, the flashing method for the vehicle system may further include:
when a data breakpoint occurs during the data transmission to the initial update backup system partition, updating the breakpoint information according to the data breakpoint to obtain updated breakpoint information;
according to the updated breakpoint information, returning to the step of determining the main system partition and the backup system partition of the vehicle control unit according to the partition information.

The data breakpoint can refer to in a situation where the data transmission is interrupted. After the data breakpoint occurs, the breakpoint information can be updated according to the data breakpoint to obtain the updated breakpoint information.

After the updated breakpoint information is obtained, it is possible to return to the step of determining the main system partition and the backup system partition of the vehicle control unit according to the partition information, and re-perform the data transmission.

In an embodiment of the present application, the situation where the data transmission is interrupted may include a situation where the data transmission is interrupted due to a network problem during the data transmission, and a situation where the data transmission is interrupted due to the vehicle in a non-traveling state.

S105, when the vehicle is in a parking state, switching the state of the main system partition to an inactive state, and switching the state of the target backup system partition to an active state.

The parking state can refer to a state of the vehicle when it is switching partitions. In an embodiment of the present application, the parking state can be a non-use state of the vehicle after startup. When the vehicle is in the non-use state after startup, the vehicle control unit can send a request message to the user, and switch the state of the main system partition to an inactive state and switch the state of the target backup system partition to an active state according to a result fed back by the user on the request message.

In an embodiment of the present application, after performing the travel flashing processing on the backup system partition according to the breakpoint position and the file information to obtain the target backup system partition, and before switching the state of the main system partition to the inactive state and switching the state of the target backup system partition to the active state when the vehicle is in the parking state, the method may further include:
performing integrity and compatibility checks of software on the target backup system partition to obtain a check result;
if the check result meets a preset check result requirement, executing the step of when the vehicle is in a parking state, switching the state of the main system partition to the inactive state and switching the state of the target backup system partition to the active state.

The integrity can refer to whether there is data missing in the software within the target backup system partition. The compatibility (compatibility) can refer to the degree of coordination between software in the target backup system partition or between combined software and hardware systems. By checking the integrity and compatibility, the check result on whether the target backup system partition can be used can be obtained.

When the check result shows that the target backup system partition can be used, the preset check result requirement is met, and the step of when the vehicle is in the parking state, switching the state of the main system partition to the inactive state and switching the state of the target backup system partition to the active state can be executed.

In an embodiment of the present application, the flashing method for the vehicle system may further include:
performing a clearing processing on a diagnostic trouble code in the target backup system partition during switching the state of the target backup system partition to the active state.

The diagnostic trouble code (Diagnostic Trouble Code, DTC) is a code used to identify a location and cause of a vehicle failure. The clearing processing may refer to a process of clearing the diagnostic trouble code.

The flashing method for the vehicle system provided by the present application can include: reading partition information of a vehicle control unit when a vehicle is in a traveling state; determining a main system partition and a backup system partition of the vehicle control unit according to the partition information, where the main system partition is a system partition in an active state and the backup system partition is a system partition in an inactive state; accessing the backup system partition to obtain breakpoint information, where the breakpoint information represents a breakpoint position of the backup system partition during travel flashing, and file information used for the travel flashing; performing a travel flashing processing on the backup system partition according to the breakpoint position and the file information, to obtain a target backup system partition; when the vehicle is in a parking state, switching the state of the main system partition to an inactive state and switching the state of the target backup system partition to an active state. As such, by performing the flashing on the backup system partition, the use of the main system partition can be prevented from being affected, and at the same time, by acquiring the breakpoint information of the backup system partition, the flashing of the backup system partition can be performed at any time according to the user's use of the vehicle, thereby solving the problem that the vehicle is inconvenient to use during the system update and upgrade.

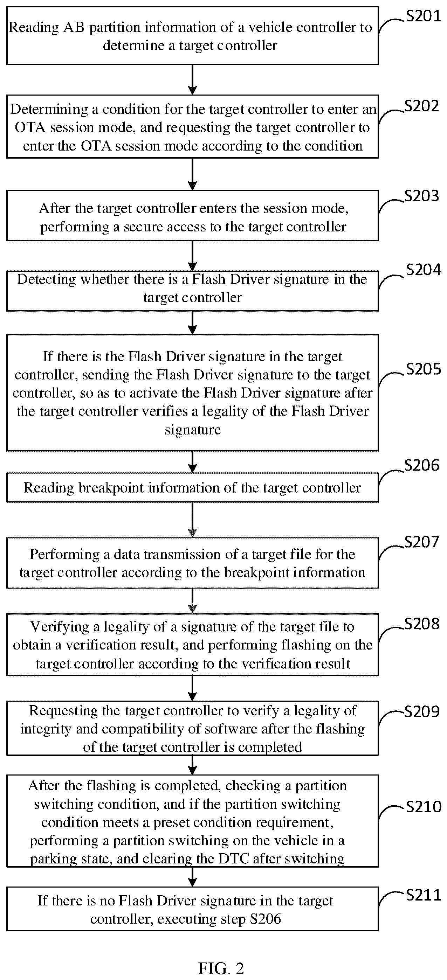

FIG. 2 is a schematic flow chart of another flashing method for a vehicle system provided by an embodiment of the present application, and the execution entity of this method can be an OTA Master, and it is not particularly limited in this embodiment. As shown in FIG. 2, the method can include steps below.

S201, reading AB partition information of a vehicle controller to determine a target controller.

Where the target controller is a controller that is inactive and supports flashing.

By reading the AB partition information of the vehicle controller, it can be determined whether the target controller supports AB partitioning and whether the inactive area supports flashing.

S202, determining a condition for the target controller to enter an OTA session mode, and requesting the target controller to enter the OTA session mode according to the condition.

Where the OTA Master checks whether the target controller can enter the OTA session mode, requests the target controller to enter the OTA session mode when the check result is allowing to enter, and determines a current mode of the target controller after requesting the target controller to enter the OTA session mode.

S203, after the target controller enters the session mode, performing a secure access to the target controller.

S204, detecting whether there is a Flash Driver signature in the target controller.

S205, if there is the Flash Driver signature in the target controller, sending the Flash Driver signature to the target controller, to activate the Flash Driver signature after the target controller verifies a legality of the Flash Driver signature.

Where for the target controller with the Flash Driver signature, the Flash Driver signature can be transmitted using Service 34, Service 36, and Service 37. After the transmission is completed, the Flash Driver signature is verified, and after the verification is successful, the Flash Drive signature is activated.

In an embodiment of the present application, in the process of transmitting the Flash Driver signature using Services 34/36/37, Service 34 represents a request to download, Service 36 represents transmitting data, and 37 represents a request to exit a transmission. During a transmission process of the Flash Driver signature, the Flash Driver signature can be transmitted block by block according to data blocks, and after the transmission in each data block is completed, Service 36 is reused for data transmission until the Flash Driver signature is completely transmitted. In an embodiment of the present application, the transmission of the Flash Driver signature adopts data frame transmission.

S206, reading breakpoint information of the target controller.

S207, performing a data transmission of a target file for the target controller according to the breakpoint information.

Where after reading the breakpoint information, a file identifier, a file address, and a breakpoint position for the flashing are acquired, and an erasure begins from the breakpoint position according to the breakpoint information.

After the erasure, a file to be used for flashing can be transmitted through Service 34, Service 36, and Service 37, where a breakpoint is only allowed in Service 36 during the period when the user is using the vehicle, and when the breakpoint occurs, it is necessary to return to step S202.

In an embodiment of the present application, when the file to be used for flashing is composed of multiple data units, it can return to Service 34 to continue data transmission after Service 37 is completed; when the data unit is composed of multiple data packets, Service 37 can be reused to transmit data; and when another file to be used for flashing needs to be transmitted, it can return to step S207.

S208, verifying a legality of a signature of the target file to obtain a verification result, and performing flashing on the target controller according to the verification result.

S209, requesting the target controller to verify a legality of integrity and compatibility of software after the flashing of the target controller is completed.

S210, after the flashing is completed, checking a partition switching condition, and if the partition switching condition meets a preset condition requirement, performing a partition switching on the vehicle in a parking state, and clearing the DTC after switching.

After software update of the target controller is completed, the switching condition is checked, and when the switching condition is met, the partition switching is performed, and the DTC during the process of the partition switching is cleared.

S211, if there is no Flash Driver signature in the target controller, executing step S206.

In the flashing method for another vehicle system provided by the embodiments of the present application, ECU of a whole vehicle which supports AB partitioning and can be flashed in an inactive area can be read, and the ECU that supports the flashing in travelling of the vehicle can be distinguished. At the same time, through the setting of OTA's exclusive session mode, a session of the flashing in travelling of the vehicle may be managed. In addition, through the position and storage of the ECU's own breakpoint, the software can be updated and upgraded at any time according to the use of the vehicle. Moreover, the switching condition can be checked before the partition switching, and the switching can be carried out after the condition is met.

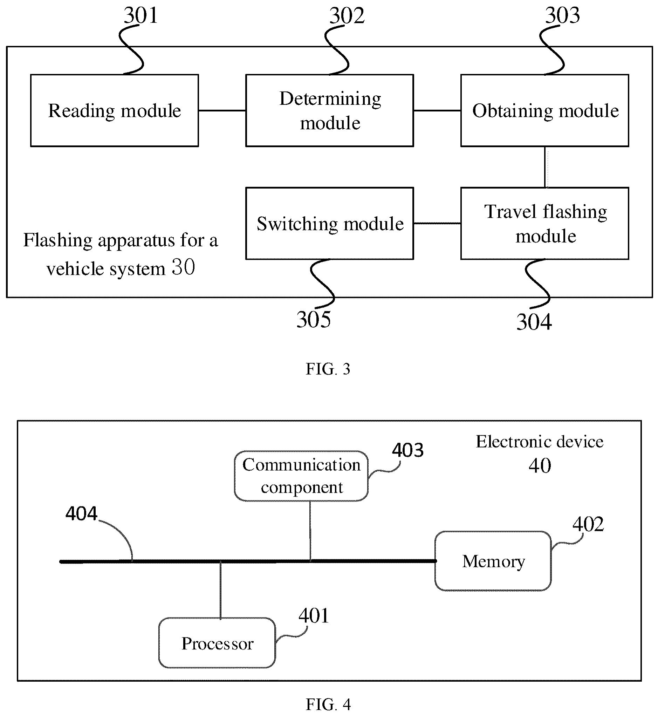

FIG. 3 is a structural schematic diagram of a flashing apparatus of a vehicle system provided by an embodiment of the present application. As shown in FIG. 3, the flashing apparatus 30 for the vehicle system includes a reading module 301, a determining module 302, an obtaining module 303, a travel flashing module 304 and a switching module 305; where
the reading module 301 is configured to read partition information of a vehicle control unit when a vehicle is in a traveling state;
the determining module 302 is configured to determine a main system partition and a backup system partition of the vehicle control unit according to the partition information, where the main system partition is a system partition in an active state and the backup system partition is a system partition in an inactive state;
the obtaining module 303 is configured to access the backup system partition to obtain breakpoint information, where the breakpoint information represents a breakpoint position of the backup system partition during travel flashing, and file information used for the travel flashing;
the travel flashing module 304 is configured to perform a travel flashing processing on the backup system partition according to the breakpoint position and the file information to obtain a target backup system partition; and
the switching module 305 is configured to, when the vehicle is in a parking state, switch the state of the main system partition to an inactive state and switch the state of the target backup system partition to an active state.

In an embodiment of the present application, the reading module 301 can also be specifically configured to:
request the backup system partition to enter a session mode; and
after the backup system partition enters the session mode, execute the step of accessing the backup system partition to obtain the breakpoint information.

In an embodiment of the present application, the reading module 301 can also be specifically configured to:
check a current mode of the backup system partition; and
if the current mode is a session mode, execute the step of accessing the backup system partition to obtain the breakpoint information.

In an embodiment of the present application, the determining module 302 can also be specifically configured to:
access the backup system partition to acquire a state of a boot loader in the backup system partition; and
if the boot loader is in a program inactive state, send a boot loader to the backup system partition, and perform, after the backup system partition receives the boot loader, a signature verification on the boot loader to obtain a signature verification result, and then execute the step of accessing the backup system partition to obtain the breakpoint information according to the signature verification result.

In an embodiment of the present application, the determining module 302 can also be specifically configured to:
if the boot loader is in a program active state, execute the step of accessing the backup system partition to obtain the breakpoint information.

In an embodiment of the present application, the travel flashing module 304 can also be specifically configured to:
perform an erasure processing on the backup system partition according to the breakpoint position to obtain an initial update backup system partition; and
perform a travel flashing processing on the initial update backup system partition according to the file information to obtain the target backup system partition.

In an embodiment of the present application, the travel flashing module 304 can also be specifically configured to:
determine a file identifier and a file address according to the file information;
performing a data transmission to the initial update backup system partition according to the file identifier and the file address to obtain transmitted data; and
perform a travel flashing processing from the breakpoint position according to the transmitted data to obtain the target backup system partition.

In an embodiment of the present application, the travel flashing module 304 can also be specifically configured to:
when a data breakpoint occurs during the data transmission to the initial update backup system partition, update the breakpoint information according to the data breakpoint to obtain updated breakpoint information; and
according to the updated breakpoint information, return to the step of determining the main system partition and the backup system partition of the vehicle control unit according to the partition information.

In an embodiment of the present application, the travel flashing module 304 can also be configured to:
check an integrity and compatibility of software in the target backup system partition, to obtain a check result; and
if the check result meets a preset check result requirement, execute the step of when the vehicle is in the parking state, switching the state of the main system partition to the inactive state and switching the state of the target backup system partition to the active state.

In an embodiment of the present application, the switching module 305 can also be configured to:
perform a clearing processing on a diagnostic trouble code in the target backup system partition during switching the state of the target backup system partition to the active state.

As can be seen from the above, the flashing apparatus 30 for the vehicle system according to the embodiment of the present application is composed of the following modules: a reading module 301, which is configured to read partition information of a vehicle control unit when the vehicle is in a traveling state; a determining module 302, which is configured to determine a main system partition and a backup system partition of the vehicle control unit according to the partition information, where the main system partition is a system partition in an active state and the backup system partition is a system partition in an inactive state; an obtaining module 303, which is configured to access the backup system partition to obtain breakpoint information, where the breakpoint information represents a breakpoint position of the backup system partition during travel flashing, and file information used for the travel flashing; a travel flashing module 304, which is configured to perform a travel flashing processing on the backup system partition according to the breakpoint position and the file information to obtain a target backup system partition; and a switching module 305, which is configured to, when the vehicle is in the parking state, switch the state of the main system partition to an inactive state and the state of the target backup system partition to an active state. As such, by performing the flashing on the backup system partition, the use of the main system partition can be prevented from being affected, and at the same time, by acquiring the breakpoint information of the backup system partition, the flashing of the backup system partition can be performed at any time according to the user's use of the vehicle, thereby solving the problem that the vehicle is inconvenient to use during the system update and upgrade.

FIG. 4 is a schematic structural diagram of an electronic device provided by an embodiment of the present application. As shown in FIG. 4, an electronic device 40 includes:
a processor 401 of one or more processing cores, a memory 402 of one or more computer-readable storage medium, a communication component 403 and other components, where the processor 401, the memory 402 and the communication component 403 are connected by a bus 404.

In a specific implementation, at least one processor 401 executes computer-executable instructions stored in the memory 402, so that the at least one processor 401 executes the above-mentioned flashing method for the vehicle system.

A specific implementation of the processor 401 can be referred to the above-mentioned method embodiments, and its implementation principle and technical effect are similar to the latter. Thus, these will not be repeated in the present embodiment.

In the above embodiment shown in FIG. 4, it should be understood that the processor can be a central processing unit (Central Processing Unit, CPU), or other types of processors such as a general-purpose processor, a digital signal processor (Digital Signal Processor DSP), an application specific integrated circuit (Application Specific Integrated Circuit, ASIC), etc. The general-purpose processor can be a microprocessor or any conventional processor, etc. The steps of the method disclosed in the present invention can be directly implemented by a hardware processor, or implemented by a combination of hardware and software modules in the processor.

The memory may include high-speed memory (Random Access Memory, RAM) and may also include non-volatile memory (Non-volatile Memory, NVM), such as at least one disk storage.

The bus can be an industry standard architecture (Industry Standard Architecture, ISA) bus, a peripheral component interconnect (Peripheral Component, PCI) bus or an extended industry standard architecture (Extended Industry Standard Architecture, EISA) bus, etc. The bus can be classified into an address bus, a data bus, and a control bus, etc. For convenience of description, the bus in the accompanying drawings of the present application is not limited to only one bus or one type of bus.

In some embodiments, there is further provided a computer program product, which includes a computer program or instructions, the computer program, or instructions, when executed by a processor, implements the steps in any of the above-mentioned flashing methods for the vehicle system.

The specific implementation of the above operations can make reference to the previous embodiments, and will not be repeated here.

It can be understood by those skilled in the art that all or part of the steps in various methods of the above embodiments can be implemented by instructions or by controlling related hardware through instructions, and the instructions can be stored in a computer-readable storage medium and loaded and executed by a processor.

For this reason, an embodiment of the present application provides a computer-readable storage medium, in which a plurality of instructions are stored, and the instructions can be loaded by a processor to execute the steps in any one of the flashing methods for the vehicle system provided by the embodiments of the present application.

The storage medium may include read only memory (ROM, Read Only Memory), random access memory (RAM, Random Access Memory), a magnetic disk or an optical disk, etc.

According to one aspect of the present application, there is provided a computer program product or computer program, and the computer program product or computer program includes computer instructions stored in a computer-readable storage medium.

Due to the instructions stored in the storage medium, the steps in any one of the flashing methods for the vehicle system provided by the embodiments of the present application can be executed, so the beneficial effects that can be achieved by any one of the flashing methods for the vehicle system provided by the embodiments of the present application can be realized. See the previous embodiments for details, and the details are not repeated here.

Other implementations of the present application will easily occur to those skilled in the art after considering the specification and practicing the present application disclosed herein. The present application is intended to cover any variations, usage, or adaptations of the present application, which follow the general principles of the present application and include common knowledge or common technical means that are not disclosed in the present application in this technical field. The specification and embodiments are to be regarded as exemplary only, with the true scope and spirit of the present application being indicated by the following claims.

It should be understood that the present application is not limited to the precise structures described above and shown in the drawings, and various modifications and changes can be made without departing from its scope. The scope of the present application is only subject to the appended claims.

## Claims

1. A flashing method for a vehicle system, comprising:
when a vehicle is in a traveling state, reading partition information of a vehicle control unit;
determining a main system partition and a backup system partition of the vehicle control unit according to the partition information, wherein the main system partition is a system partition in an active state and the backup system partition is a system partition in an inactive state;
accessing the backup system partition to obtain breakpoint information, wherein the breakpoint information represents a breakpoint position of the backup system partition during travel flashing, and file information used for the travel flashing;
performing a travel flashing processing on the backup system partition according to the breakpoint position and the file information, to obtain a target backup system partition; and
when the vehicle is in a parking state, switching the state of the main system partition to an inactive state, and switching the state of the target backup system partition to an active state.

2. The method according to claim 1, wherein after determining the main system partition and the backup system partition of the vehicle control unit according to the partition information, and before accessing the backup system partition to obtain the breakpoint information, the method further comprises:
requesting the backup system partition to enter a session mode; and
after the backup system partition enters the session mode, executing the step of accessing the backup system partition to obtain the breakpoint information.

3. The method according to claim 2, wherein after requesting the backup system partition to enter the session mode, after the backup system partition enters the session mode, and before executing the step of accessing the backup system partition to obtain the breakpoint information, the method further comprises:
checking a current mode of the backup system partition; and
if the current mode is the session mode, executing the step of accessing the backup system partition to obtain the breakpoint information.

4. The method according to claim 1, wherein accessing the backup system partition to obtain the breakpoint information comprises:
accessing the backup system partition to acquire a state of a boot loader in the backup system partition; and
if the boot loader is in a program inactive state, sending a boot loader to the backup system partition, and performing, after the backup system partition receives the boot loader, a signature verification on the boot loader to obtain a signature verification result, and then executing the step of accessing the backup system partition to obtain the breakpoint information according to the signature verification result.

5. The method according to claim 4, wherein after accessing the backup system partition to acquire the state of the boot loader in the backup system partition, the method further comprises:
if the boot loader is in a program active state, executing the step of accessing the backup system partition to obtain the breakpoint information.

6. The method according to claim 1, wherein performing the travel flashing processing on the backup system partition according to the breakpoint position and the file information to obtain the target backup system partition comprises:
performing an erasure processing on the backup system partition according to the breakpoint position to obtain an initial update backup system partition; and
performing the travel flashing processing on the initial update backup system partition according to the file information to obtain the target backup system partition.

7. The method according to claim 6, wherein performing the travel flashing processing on the initial update backup system partition according to the file information to obtain the target backup system partition comprises:
determining a file identifier and a file address according to the file information;
performing a data transmission to the initial update backup system partition according to the file identifier and the file address to obtain transmitted data; and
performing the travel flashing processing from the breakpoint position according to the transmitted data to obtain the target backup system partition.

8. The method according to claim 7, wherein the method further comprises:
when a data breakpoint occurs during the data transmission to the initial update backup system partition, updating the breakpoint information according to the data breakpoint to obtain updated breakpoint information;
according to the updated breakpoint information, returning to the step of determining the main system partition and the backup system partition of the vehicle control unit according to the partition information.

9. The method according to claim 1, wherein after performing the travel flashing processing on the backup system partition according to the breakpoint position and the file information to obtain the target backup system partition, and before the step of when the vehicle is in the parking state, switching the state of the main system partition to the inactive state and switching the state of the target backup system partition to the active state, the method further comprises:
checking an integrity and compatibility of software in the target backup system partition to obtain a check result;
if the check result meets a preset check result requirement, executing the step of when the vehicle is in the parking state, switching the state of the main system partition to the inactive state and switching the state of the target backup system partition to the active state.

10. The method according to claim 1, wherein the method further comprises:
after switching the state of the target backup system partition to the active state, performing a clearing processing on a diagnostic trouble code in the target backup system partition.

11. A flashing apparatus for a vehicle system, comprising:
a reading module, configured to read partition information of a vehicle control unit when a vehicle is in a traveling state;
a determining module, configured to determine a main system partition and a backup system partition of the vehicle control unit according to the partition information, wherein the main system partition is a system partition in an active state and the backup system partition is a system partition in an inactive state;
an obtaining module, configured to access the backup system partition to obtain breakpoint information, wherein the breakpoint information represents a breakpoint position of the backup system partition during travel flashing, and file information used for the travel flashing;
a travel flashing module, configured to perform a travel flashing processing on the backup system partition according to the breakpoint position and the file information to obtain a target backup system partition; and
a switching module, configured to, when the vehicle is in a parking state, switch the state of the main system partition to an inactive state and switch the state of the target backup system partition to an active state.

12. An electronic device, comprising: a processor and a memory communicatively connected with the processor; wherein
the memory stores computer-executable instructions; and
the processor executes the computer-executable instructions stored in the memory to implement the flashing method for the vehicle system according to any one of claims 1 to 10.

13. A vehicle, comprising the electronic device according to claim 12.

14. A computer-readable storage medium, wherein computer-executable instructions are stored in the computer-readable storage medium, which stores computer-executable instructions that, when executed by a processor, enable to implement the flashing method for the vehicle system according to any one of claims 1 to 10.
